# EUROPEAN PATENT APPLICATION

(11) **EP 3 222 513 A1**
(43) Date of publication of application: **27.09.2017**
(21) Application number: 16162245.1
(22) Date of filing: 24.03.2016
(51) Int. Cl.: B64C 1/06, B64C 1/12, B64C 1/40, B29C 67/00

(54) **METHOD FOR MANUFACTURING A LINING PANEL WITH AN INTEGRATED ELECTRICAL CONNECTOR FOR AN AIRCRAFT OR SPACECRAFT, LINING PANEL AND LINING PANEL ASSEMBLY**

(71) Applicant: Airbus Operations GmbH, 21129 Hamburg (DE)
(72) Inventor: Hegenbart, Matthias, 21129 Hamburg (DE); Linde, Peter, 21129 Hamburg (DE); Brodale, Camilla, 21129 Hamburg (DE); Steinlicht, Thorsten, 21129 Hamburg (DE)
(74) Representative: Isarpatent

(57) **Abstract**

The present invention pertains to method for manufacturing a lining panel (1) with an integrated electrical connector (5) for a lining of a passenger cabin of an aircraft or spacecraft. The method comprises using an additive manufacturing (AM) or 3D printing technique to laterally form electrically conductive pins (6) on a panel body (3) of the lining panel (1) to provide an electrical connector (5). The electrically conductive pins (6) are formed to connect to electric lines (2) attached to or formed on or into the panel body (3) of the lining panel (1). The invention further pertains to a lining panel (1) with an integrated electrical connector (5) for a lining of a passenger cabin of an aircraft or spacecraft. The lining panel (1) comprises a panel body (3), electric lines (2) being attached to or formed on or into the panel body (3), and an electrical connector (5) with electrically conductive pins (6) formed laterally on the panel body (3) of the lining panel (1) using an AM or 3D printing technique. The electrically conductive pins (6) are configured to connect to the electric lines (2).

## Description

The present invention pertains to a method for manufacturing a lining panel with an integrated electrical connector for an aircraft or spacecraft. The present invention further pertains to a lining panel of this type and a lining panel assembly employing such lining panels.

Although generally applicable to any kind of lining panel, e.g. for use in the transport industry in passenger cabins of landborne, airborne, or waterborne vehicles, the present invention and the problem on which it is based will be explained in greater detail with reference to lining panels for passenger cabins of commercial aircraft.

Common passenger aircraft comprise a fuselage that holds a passenger cabin, the latter containing the passenger seats, the hand luggage compartments, the sanitary facilities and so on. The inside of such a passenger cabin is usually separated from the fuselage, the skin, and other structural parts of the aircraft by a lining with a plurality of lining panels adjoining one another. The passenger cabin is supplied by a data and power infrastructure that is essentially built up of electrical wiring and corresponding connectors that are often placed between the aircraft structure and the lining panels, such that the electric infrastructure is 'hidden' from the passengers. Specifically, a multitude of wires may be arranged in cable bundles, each wire being solidly formed with a circular profile that is surrounded by an insulation. The cable bundles may be anchored within fixed locations using brackets or similar holding components that in turn may be attached to the lining panels. The cable bundles may have a finite length and may be connected to each other with electrical connectors, which may be likewise fastened to the lining panels. These connectors may be formed as box-like components of different sizes including connection ports for coupling various power cables or data cables from the cable bundles. Typically, strict requirements are put on the functionality, on the temperature and humidity resistance, as well as on the general safety precautions of such an electric infrastructure. Consequently, a strong focus is particularly placed on the robustness of the power and data cabling.

Recently, flexible electronics have been under close scrutiny within the regime of aerospace technology as these potentially offer lightweight and space saving alternatives to common cable systems. To this end, electronic devices may be mounted on flexible plastic substrates to provide flexible and flat cables for data and power transmission. These solutions typically require less space and weight than conventional cables. Moreover, such flat cables may simply be bonded to the outer surfaces of lining panels, wall segments, or the like. However, as in case of conventional cables, these solutions often involve laborious manufacturing and installation processes that are mostly separated from the assembly of the lining panels themselves. Convenient solutions have been suggested recently that integrate conductors directly into panel bodies, e.g. like the one disclosed in document US 2015/0053663 A1.

In general, any weight reduction can have significant impact on aircraft load and, in consequence, fuel consumption. In addition, it is desirable to provide an electric infrastructure with minimal installation and/or production effort. 3D printing provides extraordinary design freedom and hence it is widely used for manufacturing with multiple applications in engineering, construction, industrial design, automotive industries, and aerospace industries. Amongst various advantages, it offers the possibility to integrally form functional and structural elements into components, which otherwise - within conventional manufacturing - would necessarily require elaborate installation efforts.

Against this background, it is one object of the present invention to provide lightweight solutions for the data and power transmission infrastructure of a passenger cabin offering simple manufacture and installation.

This object is achieved by a method having the features of claim 1, a lining panel having the features of claim 8, a lining panel assembly having the features of claim 13 and an aircraft or spacecraft having the features of claim 15.

According to a first aspect of the invention, a method for manufacturing a lining panel with an integrated electrical connector for a lining of a passenger cabin of an aircraft or spacecraft comprises using an additive manufacturing (AM) or 3D printing technique to laterally form electrically conductive pins on a panel body of the lining panel to provide an electrical connector. The electrically conductive pins are formed to connect to electric lines attached to or formed on or into the panel body of the lining panel.

According to a second aspect of the invention, a lining panel with an integrated electrical connector for a lining of a passenger cabin of an aircraft or spacecraft comprises a panel body, electric lines being attached to or formed on or into the panel body, and an electrical connector with electrically conductive pins formed laterally on the panel body of the lining panel using an AM or 3D printing technique. The electrically conductive pins are configured to connect to the electric lines.

According to a third aspect of the invention, a lining panel assembly comprises a first lining panel according to the second aspect of the invention and a second lining panel according to the second aspect of the invention. The electrically conductive pins of the first lining panel are complementary formed to the electrically conductive pins of the second lining panel. The first lining panel laterally joins the second lining panel such that the electrically conductive pins of the first lining panel establish an electrical contact with the electrically conductive pins of the second lining panel.

According to a fourth aspect of the invention, an aircraft or spacecraft comprises a lining panel according to the second aspect of the invention and/or a lining panel assembly according to the third aspect of the invention.

One idea of the present invention is to replace individual electric wires, cable routes or bundles, and, in particular, cable connectors and similar components of an electrical infrastructure of a passenger cabin by integrating electric connections directly into the lining panels of the cabin lining in a (multi-material) printing process. Using 3D printing processes even complexly structured electric connections, or even electric circuitry, may be manufactured directly on or in the panel bodies of the lining panels in cost and time efficient production manner. Due to this fact, lining panels according to the present invention can either replace and/or complement conventional lining panels of a passenger cabin. Various specific configurations of the thus implemented electrical connectors and electric lines may be advantageous depending on the application. For example, electrical connectors may be printed on a surface of a panel body, e.g. of a conventionally manufactured lining panel that may not require any particular preparation. These electrical connectors may then be connected with electrical lines installed at or on the panel body of the lining panel such that the lining panel may be electrically connected to other lining panels via the electrical connector. The electric lines may, for example, be provided in the form of flat flexible cables or the like and may be attached to a surface of the panel body, e.g. by bonding. However, the electric lines themselves may also be printed on or into the panel body by an AM or 3D printing technique. The electric lines may be partially or fully integrated into a panel body, e.g. such that the electric lines are placed flush with a surface of the panel body, which may be advantageous as the electric lines lie protected within the panel body. In addition, electric insulation of the electric connections may be provided, e.g. directly in the printing process.

The present invention offers a multitude of advantages for the passenger cabin environment. Due to the present invention, separately installed electrical connectors, electric wires and cable bundles may be avoided or at least significantly reduced in number. Holding components like brackets or similar may be reduced. In general, reductions in weight and space may be achieved. Furthermore, the present invention offers several advantages for the general safety and reliability of an electric infrastructure of a passenger cabin. Electrical connectors as well as electric lines may be integrated into the lining panels and hence there is less risk that cables or wires get torn apart or damaged during installation or maintenance. Inspection and maintenance efforts may be reduced on a general basis. Thus, not only weight, costs, installation and manufacturing efforts can be significantly lowered but also the general reliability of an electrical infrastructure of a passenger cabin can be improved.

In general, aspects of the invention offers great advantages for 3D printing or AM technology since 3D components may be printed without the additional need for subjecting the components or objects to further processing steps such as milling, cutting or drilling. This allows for a more efficient, material saving and time saving manufacturing process. Particularly advantageous in general is the reduction of costs, weight, lead time, part count and manufacturing complexity coming along with employing AM technology for printing electrical connectors, electric lines, electric circuits or other objects used for, employed in or being part of airborne vehicles. Moreover, the geometric and functional shape of the printed components or objects may be flexibly designed with regard to the intended technical purpose of parts or regions of the component/object.

Free form fabrication (FFF), direct manufacturing (DM), fused deposition modelling (FDM), powder bed printing (PBP), laminated object manufacturing (LOM), stereolithography (SL), selective laser sintering (SLS), selective laser melting (SLM), selective heat sintering (SHS), electron beam melting (EBM), direct ink writing (DIW), digital light processing (DLP) and additive layer manufacturing (ALM) belong to a general hierarchy of additive manufacturing (AM) methods, generally termed as 3D printing techniques. Those systems are used for generating three-dimensional objects based on digital model data by creating a cross-sectional pattern of the object to be formed and forming the three-dimensional solid object by sequentially building up layers of material. Any of such procedures will be referred to in the following description as AM or 3D printing without loss of generality. AM or 3D printing techniques usually include selectively depositing material layer by layer, selectively fusing or solidifying the material and removing excess material, if needed. 3D printing is currently used for prototyping and distributed manufacturing with multiple applications in engineering, construction, industrial design, automotive industries and aerospace industries.

Advantageous embodiments and improvements of the present invention are found in the subordinate claims.

According to an embodiment of the invention, the method may further comprise forming an insulation on the panel body of the lining panel around the electrically conductive pins. The insulation may include an insulating potting being selected from the group consisting of silicones, epoxies, polyesters, and urethanes or similar. Accordingly, in an embodiment of the lining panel, an insulation may be formed on the panel body of the lining panel around the electrically conductive pins. In one particular embodiment, the insulation may provide electrical insulation of the electric components. In another embodiment, in order to fulfill requirements with respect to moisture insulation, a groove may be printed surrounding the electrically conductive pins, which is then filled with an insulating potting. The insulating potting may for example be printed during a multi-material printing process. However, the insulation may be formed for more general protection of the components against vibration, moisture, thermal shock, chemicals and other contaminants.

According to an embodiment of the invention, the method may further comprise using an AM or 3D printing technique to form the electric lines on or into the panel body of the lining panel. Hence, not only the electrical connectors but also the electric lines may be formed in one single printing process on a panel body of a lining panel. Alternatively, the electrical connectors and the electric lines may be formed in consecutive printing steps.

According to a further embodiment of the invention, the method may further comprise using an AM or 3D printing technique to manufacture the panel body of the lining panel. Thus, the electrical connectors and/or the electric lines of the invention may either be printed by a separate 3D printer on a panel body prepared beforehand, e.g. a conventionally manufactured lining panel of a plastic or reinforced plastic material, or some or all of the electrical connectors and/or the electric lines may be printed together with the panel body itself in a multi-material printing process. For this, the AM or 3D printing technique may be optimized to employ different materials in a multiple material printing process. The respective 3D printer may be particularly configured to print electrically conductive circuits. In one exemplary embodiment, a powder bed or inkjet head 3D printer may be employed to place highly conductive particles, e.g. silver nanoparticles or other highly conductive metal or metal alloy materials, or highly conductive fibers or filaments on a substrate, e.g. a plastic material or fiber reinforced plastic material including fabric.

At least one of the electrically conductive pins and the electric lines may simultaneously be formed with the manufacturing of the panel body of the lining panel. In this embodiment, the lining panel may be manufactured as one single component in one continuous and rapid additive manufacturing process. Thus, the lining panel of this embodiment may be manufactured in a particularly cost- and time-efficient way.

According to an alternative embodiment of the invention, the method may further comprise using an automated tape placement technique to manufacture the panel body of the lining panel. In particular, fast manufacturing of the panel body may be achieved by combining rapid fiber- or tape-placement processes in a fast lay-up method. This permits to employ highly efficient pre-pregs with high fiber density, i.e. composite fibers pre-impregnated with a matrix material, such as epoxy, wherein the fibers may be provided in the form of fabric layers or the like. Hence, in a first method step of the invention, the panel body may be manufactured as a composite component by tape placement, e.g. by conventional tape placement methods such as laser assisted tape placement or variants thereof. In a next step of the method, electrical connectors and/or electric lines may then be printed onto or into the panel body to provide a lining panel with integrated electrical connectors and/or electric lines.

According to an embodiment of the invention, the method may further comprise forming connector ports within the panel body of the lining panel configured to take in the electrically conductive pins. The connector ports may be formed by at least one of laser ablation and an AM or 3D printing technique. Accordingly, in an embodiment of the lining panel, the electrically conductive pins may be formed within connector ports provided on the panel body of the lining panel. For example, a premanufactured panel body may be provided in a tape-placement process. In a next step, connector ports may be formed into the panel body by laser ablation in a precisely controlled way. In a further step, electrically conductive pins may then be printed into the thus formed connector ports. For example, depending on the desired geometry of the connector ports, material may be removed in a single pass of the laser, or, alternatively, in multiple passes in succession. A laser beam enables to form connector ports very precisely and rapidly. In one variant, the laser may be implemented into a print head of a 3D printer such that the electrically conductive pins may be formed into the connector ports in direct succession to the extraction of the connector ports with the laser. However, in other variants, the laser may be a standalone tool that is mechanically separated from the print head. In advantageous embodiments, some or all of the disclosed processes may be combined in various ways into one single continuous production process to increase efficiency. For example, the laser ablation process may be integrated into a tape placement process for manufacturing the panel body of the lining panel. To this end, a laser head may be adapted together with the corresponding optics to form one single system in conjunction with the tape placement head. Here, the laser could be guided by a suitable laser scanner optic or equivalent to achieve optimal geometrical freedom to produce the circuit channels. Another variant could be to integrate a laser head in front of a ink-jet or 3D-print head.

According to an embodiment of the invention, the method may further comprise forming circuit channels within the panel body of the lining panel configured to take in the electric lines. The circuit channels may be formed by at least one of laser ablation and an AM or 3D printing technique. Accordingly, in an embodiment of the lining panel, the panel body may be interspersed by circuit channels, into which the electric lines are formed. For example, as in the above example, a premanufactured panel body may be provided in a tape-placement process. In a next step, a circuit channel may be formed into the panel body by laser ablation or a more conventional process like cutting, milling, drilling etc., where material can be removed from the panel body in a precisely controlled way. The panel body for example may be formed from plastic or reinforced plastic. In a further step, electric lines may then be printed into the thus formed circuit channels.

According to an embodiment of the lining panel, the electrically conductive pins may be formed in a generally planar configuration. Furthermore, the electric lines may be formed in a generally planar configuration. Hence, the electrical connectors as well as the electric lines may be implemented into a panel body with minimum space requirements and with minimum interference with the structural integrity of the panel body.

According to an embodiment of the lining panel, the electric lines may be configured as at least one of data lines and power lines. AM or 3D printing technologies generally allow to print electric lines, electrical connectors, electronic circuitry, circuit boards and other electronic structures by employing highly conductive 3D printing filaments or the like and combine them with known insulating materials. The circuits may be printed directly onto a range of common panel body materials: plastics, fiber reinforced plastic or similar. In principle, it is even possible to print circuits directly onto a fabric. Costs are much lower than in case of conventional cables or the like as the product is made in a single process, without the need for individual component assembly. By employing rapid 3D printing techniques electric lines may be configured for each individual use case. In one example, electric lines may be customized as power circuits to transmit electric energy through the lining panel for powering various electric cabin components, like for example cabin lights, displays, passenger service units, general passenger electronics, safety-related terminals, flight attendant panels or the like or other components of a typical cabin management system. In other variants, electric lines may be set up to transmit entertainment data, safety-related data, video data, audio data or the like, e.g. within a cabin management system and complying with the standards of a typical cabin intercommunication data system or similar. However, by virtue of the 3D printing process even very general electric lines may be printed that are used to transmit data and power.

According to an embodiment of the lining panel, the electrically conductive pins may be configured as at least one of data pins and power pins for connecting to the data lines and the power lines. As mentioned above, AM processes generally allow to print electric lines, electrical connectors, electronic circuitry, etc., by employing highly conductive 3D printing filaments or the like to print directly onto a range of common panel body materials: plastics, fiber reinforced plastic or similar. Like this, electrically conductive pins may be configured as power pins for connecting electric lines customized as power circuits to transmit electric energy through the lining panel for powering various electric cabin components. Alternatively, electrically conductive pins may be customized as data pins for transmitting entertainment data, safety-related data, video data, audio data or the like via electric lines set-up as data lines.

According to an embodiment of the lining panel assembly, the first lining panel may be fixed to the second lining panel by fastening elements integrated into the first lining panel and the second lining panel. The fastening elements of this embodiment may be used for installation purposes, for example. For the assembly of two adjacent lining panels, the first lining panel may be placed in the desired location. In a subsequent step, the second lining panel may be placed next to the first lining panel such that the electrical connectors establish electrical contacts between the electrically conductive pins of both lining panels. Finally, the fastening elements may fix the lining panels to each other such that their relative position is secured and thus the electrical contact between the electrically conductive pins will be maintained, e.g. in case of external mechanical influences or stress, e.g. due to vibrations, shaking or similar, or due to thermal expansion of the lining panels, etc. The fastening elements may also serve as a safeguard against minor tolerance and warping related geometry deviations of the components. Gaps between the lining panels may be prevented or minimized, so that for example moisture cannot enter between the lining panels. The person of skill will readily acknowledge that various different implementations of fastening elements may be provided with the invention. For example, one lining panel may be configured with an integrated fastening element that is formed as a male-ended member, e.g. a protruding plug, tenon, stud or similar, whereas the other lining panel may be customized with an integrated fastening element that is complementary formed to the male-ended member, e.g. a socket or similar. In one particular embodiment, the fastening elements in cooperation may provide a "snap&click" functionality, wherein one lining panel may be snapped in place after aligning it with the other lining panel. The fastening element may simply be printed together with the respective lining panel. However, in other embodiments, an external fastening element may be provided, e.g. a threaded screw or similar, that may be plugged into respective openings in the lining panels, e.g. threaded holes, thus coupling the lining panels to each other.

The invention will be explained in greater detail with reference to exemplary embodiments depicted in the drawings as appended.

The accompanying drawings are included to provide a further understanding of the present invention and are incorporated in and constitute a part of this specification. The drawings illustrate the embodiments of the present invention and together with the description serve to explain the principles of the invention. Other embodiments of the present invention and many of the intended advantages of the present invention will be readily appreciated as they become better understood by reference to the following detailed description. The elements of the drawings are not necessarily to scale relative to each other. In the figures, like reference numerals denote like or functionally like components, unless indicated otherwise.
Fig. 1 schematically shows a perspective view of a lining panel with integrated electrical connector according to an embodiment of the invention and a detail view of the integrated electrical connector.
Fig. 2 schematically shows a perspective view of a lining panel assembly according to an embodiment of the invention utilizing the lining panel of Fig. 1.
Figs. 3a-d schematically illustrate individual steps of a method for manufacturing the lining panel of Fig. 1 according to an embodiment of the invention.
Figs. 4a and 4b schematically show a perspective view and a cross-sectional view of a lining panel assembly according to another embodiment of the invention.
Fig. 5 shows a flow diagram of a method for manufacturing a lining panel according to yet another embodiment of the invention.
Fig. 6 schematically shows a passenger aircraft with a passenger cabin cladded with a plurality of lining panels according to Fig. 1.

Although specific embodiments are illustrated and described herein, it will be appreciated by those of ordinary skill in the art that a variety of alternate and/or equivalent implementations may be substituted for the specific embodiments shown and described without departing from the scope of the present invention. Generally, this application is intended to cover any adaptations or variations of the specific embodiments discussed herein.

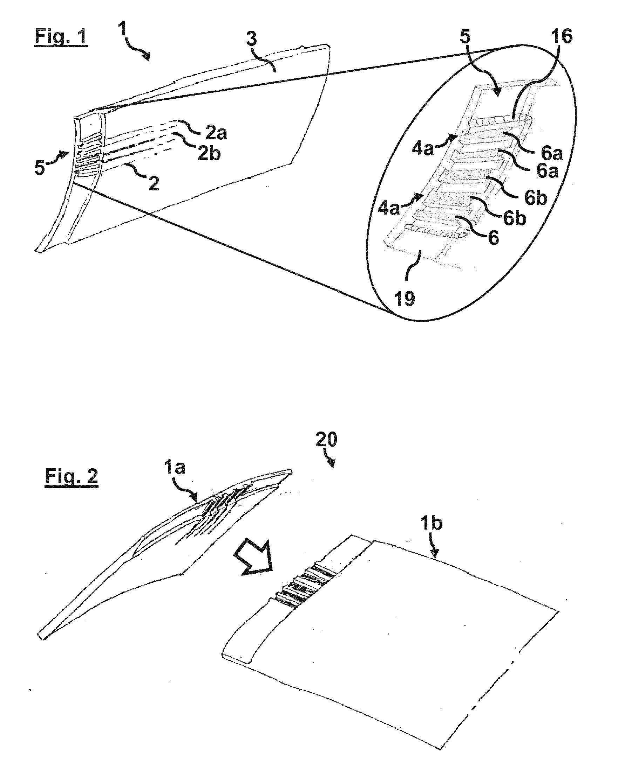

Fig. 1 schematically shows a perspective view of a lining panel 1 with integrated electrical connector 5 according to an embodiment of the invention (left) and a detail view of the integrated electrical connector 5 (right).

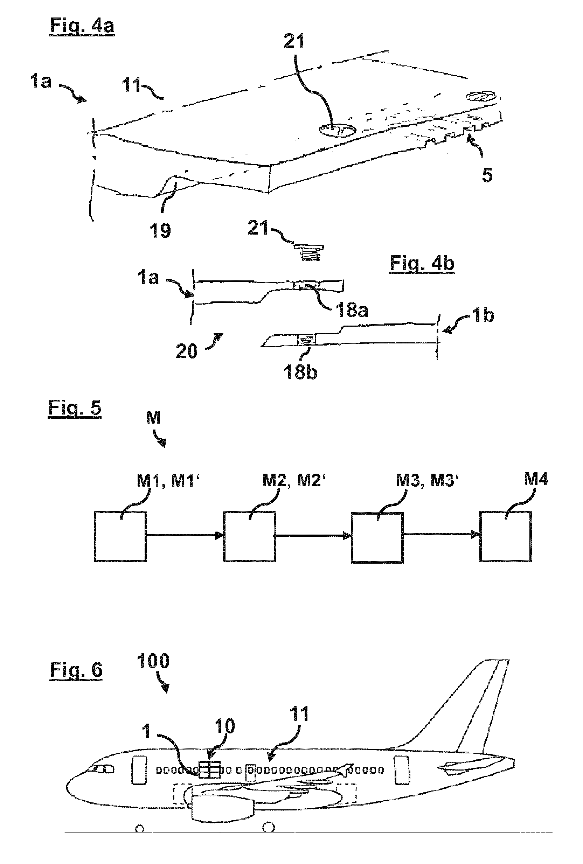

The lining panel 1 is configured to be adjoined to similar lining panels 1 to form the lining 10 of a passenger cabin 11 of a passenger aircraft 100, e.g. like the exemplary one depicted in Fig. 6. For example, the lining panel 1 may be customized as a wall panel, a floor panel, or, for example, a ceiling panel for separating the interior space of the passenger cabin 11 from the structural part and the infrastructure of the aircraft 100. In another embodiment, the lining panel 1 may be customized as a cover for a hatrack or similar stowage space or the like. In the following, the term lining panel 1 generally refers to any lining panel or cladding panel generally known from the interior design of aircraft passenger cabins 11, i.e. components that may serve a basic paneling function for functional or decoration purposes and in addition may provide additional structural or functional advantages. For example, a lining panel 1 configured as a wall panel may be customized to provide sound absorption as well as temperature insulation. Hence, lining panels 1 according to the invention may be configured for various and different purposes and applications. Thus, the person of skill will be aware that the exemplary embodiments of lining panels 1 and methods M of manufacturing the same described in the following paragraphs merely serve to illustrate the technical teaching of the present invention but should not limit the properties of the lining panels 1 beyond the purpose of the present invention.

Still referring to Fig. 1, the lining panel 1 comprises a panel body 3, electric lines 2 being formed on the panel body 3, and an electrical connector 5 with electrically conductive pins 6 formed laterally on the panel body 3 of the lining panel 1. The electric lines 2 and the electrically conductive pins 5 are formed using an AM or 3D printing technique such that the electrically conductive pins 5 connect to the electric lines 2. In principle, the complete lining panel 1 including the electric lines 2 and the electrically conductive pins 6 may be formed using one continuous multi-material 3D printing process, wherein the panel body 3 may be formed from a plastic material or fiber reinforced plastic material, and wherein the electric lines 2 and the electrically conductive pins 6 may be formed from highly conductive particles, fibers or filaments. In an alternative embodiment, the panel body 3 itself may be formed with a more conventional method, e.g. tape laying techniques, and only the electrically conductive pins 6 may be formed with an AM process. The electric lines 2 in that case may either be configured within separate cables or cable bundles or the like, e.g. as flat flexible cables, which may be attached to the panel body 3 from the outside, e.g. by bonding or similar, or, as an alternative, the electric lines 2 may also be formed on or into the panel body 3 with a 3D printing method.

The electrical connector 5 is configured to connect to the electric lines 2 of the lining panel 1 for electrically connecting this lining panel 1 to another similarly configured lining panel. Specifically, two lining panels may be formed to be joined to each other at their individual electrical connectors 5 in such a way that the electrically conductive pins 6 establish an electric contact between the electric lines 2 of both lining panels 1. This is explained in more detail with respect to Fig. 2 further below.

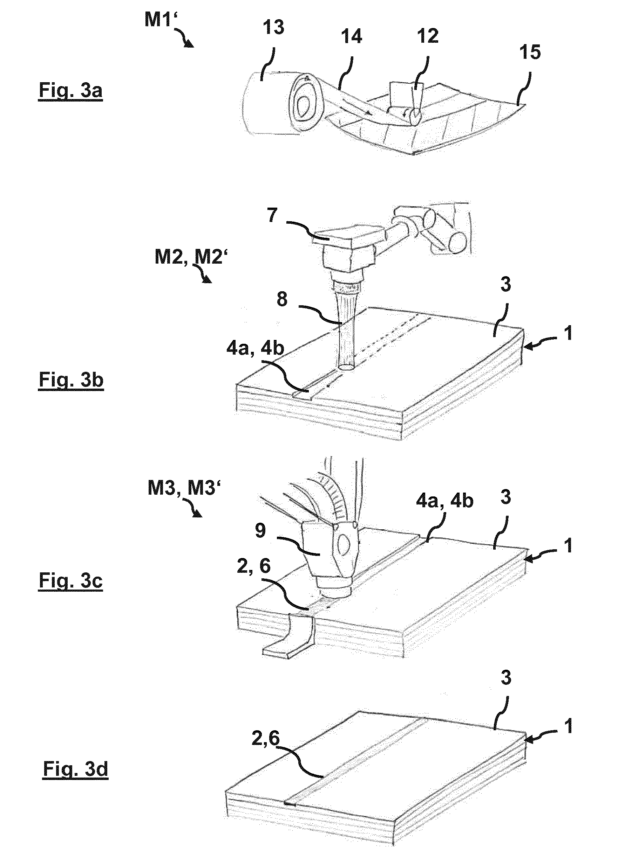

Again referring to Fig. 1, the electrically conductive pins 6 are formed within connector ports 4a provided on the panel body 3 of the lining panel 1 in a generally planar configuration. The electric lines 2 on the other hand may formed within circuit channels 4b interspersing the panel body 3 (not shown here, cf. Figs. 3a to 3d) or directly on the panel body 3 surface. Some of the electric lines 2 are specifically configured as data lines 2a and some as power lines 2b. Correspondingly, the respective electrically conductive pins 6 are configured as data pins 6a or as power pins 6b for connecting to the data lines 2a and the power lines 2b, respectively. The electrical connector 5 is formed within a recess 19 of the panel body 3, the purpose of which will become clearer with respect to Fig. 2 further below.

Still referring to Fig. 1, an insulation 16 is formed on the panel body 3 of the lining panel 1 around the electrically conductive pins 6 in the form of a groove, into which an insulating potting 17 is filled, e.g. comprising a material from the group consisting of silicones, epoxies, polyesters, and urethanes. The insulation may provide electrical insulation of the electric components as well moisture insulation, or more general protection of the components against vibration, thermal shock, chemicals and other contaminants, etc.

The lining panel 1 depicted in Fig. 1 may replace and/or complement conventional lining panels of a passenger cabin 11 of an aircraft 100. The electric lines 2 and the electrical connector 5 particularly dispense with the need for individual electric wires, cable routes or bundles, cable connectors and similar components of an electrical infrastructure of a passenger cabin 11 as they are conventionally used. In the case of the present invention, an electrical connector 5 as well as electric lines 2 are directly implemented into the lining panels 1 of the cabin lining 10 in a (multi-material) printing process. Using 3D printing processes according to the present invention even complexly structured electrical connectors 5, electric lines 2 or electric circuitry may be manufactured directly on or in the panel bodies 3 of the lining panels 1 in cost and time efficient production manner.

Like this, cable connectors, electric wires and cable bundles and the like, as well as brackets and other holding components may be avoided or at least significantly reduced in number. In general, reductions in weight and space may be achieved. Electrical connectors 5 and electric lines 2 may be fully integrated into the lining panels 1 and hence the electric infrastructure is less vulnerable to mechanical or other influences or damage. Thus, not only weight, costs, installation and manufacturing efforts can be significantly lowered but also the general reliability of a lining 10 of a passenger cabin 11 can be improved.

Fig. 2 schematically shows a perspective view of a lining panel assembly 20 according to an embodiment of the invention utilizing the lining panel 1 of Fig. 1. The lining panel assembly 20 comprises a first lining panel 1a, which may be the lining panel 1 of Fig. 1, and a second lining panel 1b. The electrically conductive pins 6 of the second lining panel 1b are complementary formed to the electrically conductive pins 6 of the first lining panel 1a such that the first lining panel 1a may be laterallyjoined (arrow in Fig. 2) to the second lining panel 1b via the electrical connector 5. To this end, both lining panels 1 are formed with respective recesses 19 that simplify the installation process as the lining panels 1 simply have to placed against each other at their recesses 19. Once the connection is established, the electrically conductive pins 6 of the first lining panel 1a form an electrical contact with the electrically conductive pins 6 of the second lining panel 1b. Thus, a lining panel assembly 20 is provided, wherein electric lines 2 as well as electrical connectors 5 are integrated into the lining panels 1 themselves such that the lining panels 1 may simply be joined side by side via their respective electrical connectors 5 to establish an electrical connection between the electric lines 2 of the lining panels 1. Hence, the lining panel assembly 20 according to the invention may render dispensable and/or replace separate cable connectors, electric wires and cable bundles and the like, as well as brackets and other holding components. The person of skill will be aware that lining panels according to the invention may be provided with more than one electrical connector 5 such that more than two lining panels 1 may be joined to each other at the same time in order to form a lining 10 of a passenger cabin 11 of an aircraft 100.

With reference to Figs. 3a-d of the drawings, individual steps M1', M2, M2', M3, M3' of a method M for manufacturing the lining panel 1 of Fig. 1 according to an embodiment of the invention are shown. The individual steps M1', M2, M2', M3, M3' of the method M according to Figs. 3a-d may be reiterated as often as required and in different sequence from the one shown. The method M comprises under M1' using an automated tape placement technique to manufacture the panel body 3 of the lining panel 1. The tape placement technique may be, for example, a rapid fiber- or tape-placement process as it is known from the production of plastic components, composite preforms and/or the fabrication of fiber-reinforced composite components. The tape placement may comprise drawing tapes 14 from a tape spool 13 and placing the tapes 14 on a support surface or similar, where the tapes 14 are superimposed upon another to form a preform 15, i.e. a semi-finished component. The tapes 14 are laid down by a tape placement head 12 that presses each tape 14 onto the already placed tapes 14. The individual tapes 14 may consist of one or more layers of tape material, e.g. layers of a continuous web, such as strip or sheet material, or layers made of fabric impregnated with a curable material, like epoxy resin or the like. The individual layers of material may be essentially the same or may differ from one another depending on the specific requirements for the tape 14 and/or the lining panel 1. The person of skill will be aware that various manufacturing processes for the fabrication of plastic or composite panels may be used in the method of this embodiment of the invention. Hence, in a first method step of the embodiment, the panel body 3 may be particularly manufactured as a composite component by tape placement, e.g. by conventional tape placement methods such as laser assisted tape placement or variants thereof. The method step under M1' may particularly comprise consolidating, curing or hardening the semi-finished component into a (fiber-reinforced) composite component to form the panel body 3.

With reference to Fig. 3b in particular, the method M further comprises under M2 forming connector ports 4a within the panel body 3 of the lining panel 1 configured to take in the electrically conductive pins 6. The connector ports 4a are formed by laser ablation. The method M further comprises under M2' forming circuit channels 4b within the panel body 3 of the lining panel 1 configured to take in the electric lines 2. The circuit channels 4b are equally formed by laser ablation. During the laser ablation, the material of panel body 3 is evaporated along a line or curve by a laser beam 8 provided by a laser head 7 to form a recess that either constitutes the connector ports 4a or the circuit channels 4b. This may be done, for example, with a pulsed laser beam 8 or with a continuous laser beam 8. Depending on the desired width and/or depth of the connector ports 4a or the circuit channels 4b, material may be removed in a single pass of the laser beam 8, or, alternatively, in multiple passes in succession. The person of skill will readily conceive appropriate variants on basis of the individual requirements of the specific application with respect to quality and rapidness. To form the connector ports 4a, the laser beam 8 may be moved along the lateral region of the lining panel 1, whereas it may be moved above the surface of the panel body 3 in order to form the circuit channels 4b. In Figs. 3a-3d the connector ports 4a and the circuit channels 4b as well as the electrically conductive pins 6 and the electric lines 2 are depicted interchangeably for reasons of simplicity.

Referring now to Fig. 3c of the drawings, the method M further comprises under M3 using an AM or 3D printing technique to laterally form electrically conductive pins 6 on a panel body 3 of the lining panel 1 with a 3D print head 9 to provide an electrical connector 5. The electrically conductive pins 6 are formed to connect to electric lines 2 attached to or formed on or into the panel body 3 of the lining panel. The method M further comprises under M3' using an AM or 3D printing technique to form electric lines 2 on or into the panel body 3 with the 3D print head 9. For this, the AM or 3D printing technique may be optimized to employ different materials in a multiple material printing process. In the embodiment shown here, the electric lines 2 of the invention (as well as the electrically conductive pins 6) are printed by a separate 3D print head 9 of a separate 3D printer on a panel body 3 prepared beforehand by the tape-placement process. The respective 3D printer is particularly configured to print electrically conductive circuits. In one exemplary embodiment, a powder bed or inkjet head 3D printer may be employed to place highly conductive particles, e.g. silver nanoparticles or other highly conductive metal or metal alloy materials, or highly conductive fibers or filaments on the panel body 3. Once the electric lines 2 are placed, it is possible to place more layers of tape material on top of the panel body 3 and the electric lines 2, and, thus, to reiterate the method step under M1', M2', and M3' until a panel body 3 with a plurality of embedded electric lines 2 is formed that may be positioned in various layers and orientations. In this respect, Fig. 3d illustrates the final lining panel 1 after forming one or several electric lines 2 and electrically conductive pins 6.

Figs. 4a and 4b schematically show a perspective view and a cross-sectional view of a lining panel assembly 20 according to another embodiment of the invention. Basically, the first lining panel 1a and the second lining panel 1b of the lining panel assembly 20 correspond to the lining panels 1a, 1b as depicted in Fig. 2. However, the embodiment of Figs. 4a and 4b additionally includes fastening elements 18a, 18b integrated into the lining panels 1a, b to improve the assembly of the lining panels 1a, 1b. Specifically, the recess 19 of the first lining panel 1a may be placed against the recess 19 of the second lining panel 1b such that the electrical connectors 5 establish electrical contacts between the electrically conductive pins 6 of both lining panels 1a, 1b. The fastening elements 18a, 18b may fix the lining panels 1a, 1b, to each other such that their relative position is secured and thus the electrical contact between the electrically conductive pins 6 will be maintained, e.g. in case of external mechanical influences or stress, e.g. due to vibrations, shaking or similar, or due to thermal expansion of the lining panels, etc. The fastening elements 18a, 18b may further serve as a safeguard against minor tolerance and warping related geometry deviations of the components. Gaps between the lining panels 1a, 1b may be prevented or minimized, so that for example moisture cannot enter between the lining panels 1a, 1b. For example, the fastening elements 18a, 18b may provide a "snap&click" functionality, wherein the fastening element 18a of the first lining panel 1a may be formed as a male-ended member, e.g. a protruding plug, while the fastening element 18b of the second lining panel 1b may be complementary formed to the male-ended member, e.g. as a female-ended socket. The embodiment of Figs. 4a and 4b exemplarily shows a lining panel assembly 20 that utilizes a separate fastening element 21, e.g. a screw. The fastening elements 18a, 18b are in this cased customized as threaded holes, into which the separate fastening element 21 may be inserted to couple both lining panels 1a, 1b.

Referring now to Fig. 5, a flow diagram of a method M for manufacturing a lining panel 1 according to yet another embodiment of the invention is shown. As in the method M described in reference to Figs. 3a-3d, the method M may comprise under M1' using an automated tape placement technique to manufacture the panel body 3 of the lining panel 1. However, as an alternative, the method M may also comprise under M1 using an AM or 3D printing technique to manufacture the panel body 3 of the lining panel 1. Next, the method M may comprise under M2 forming connector ports 4a within the panel body 3 of the lining panel 1 configured to take in the electrically conductive pins 6, and under M2' forming circuit channels 4 within the panel body 3 of the lining panel 1 configured to take in the electric lines 2, as in Figs. 3a-3d. The method further comprises under M3 using an AM or 3D printing technique to laterally form electrically conductive pins 6 on a panel body 3 of the lining panel 1 to provide an electrical connector 5, and under M3' forming the electric lines 2 on or into a panel body 3 of the lining panel 1.

Hence, the embodiment of Fig. 5 provides the possibility to manufacture the complete lining panel 1 with the help of 3D printing processes. It may be particularly advantageous to implement the method M of Fig. 5 in one single integrated, multi-material 3D printing method, wherein the panel body 3, the electrical connector 5 and the electric lines 2 are formed simultaneously by one 3D printer with one or several print heads. In one embodiment, such the 3D printer may for example be configured as a powder bed or inkjet head 3D printer and may be able to place highly conductive particles, e.g. silver nanoparticles or other highly conductive metal or metal alloy materials, or highly conductive fibers or filaments on a substrate material (forming the panel body 3), e.g. a plastic material or fiber reinforced plastic material. Like this, even highly complex and intricate panel and circuit configurations can be manufactured in a relatively straightforward way, configurations that may be impossible or nearly impossible to realize by means of conventional cables, connectors and panels.

Still referring to Fig. 5, the method may further comprise under M4 forming an insulation 16 on the panel body 3 of the lining panel 1 around the electrically conductive pins 6. Here, the insulation 16 may include an insulating potting 17 being selected from the group consisting of silicones, epoxies, polyesters, and urethanes.

In the foregoing detailed description, various features are grouped together in one or more examples or examples with the purpose of streamlining the disclosure. It is to be understood that the above description is intended to be illustrative, and not restrictive. It is intended to cover all alternatives, modifications and equivalents. Many other examples will be apparent to one skilled in the art upon reviewing the above specification.

The embodiments were chosen and described in order to best explain the principles of the invention and its practical applications, to thereby enable others skilled in the art to best utilize the invention and various embodiments with various modifications as are suited to the particular use contemplated. Many other examples will be apparent to one skilled in the art upon reviewing the above specification.

### List of reference signs

- 1: lining panel
- 1a: fist lining panel
- 1b: second lining panel
- 2: electric line
- 2a: data line
- 2b: power line
- 3: panel body
- 4a: connector ports
- 4b: circuit channel
- 5: electrical connector
- 6: electrically conductive pin
- 6a: data pin
- 6b: power pin
- 7: laser head
- 8: laser beam
- 9: 3D print head
- 10: lining
- 11: passenger cabin
- 12: tape placement head
- 13: tape spool
- 14: tape
- 15: preform
- 16: insulation
- 17: insulating potting
- 18a, 18b: integrated fastening element
- 19: recess
- 20: lining panel assembly
- 21: separate fastening element
- 100: aircraft
- M: method
- M1, M1': method step
- M2, M2': method step
- M3, M3': method step
- M4: method step

## Claims

1. Method (M) for manufacturing a lining panel (1) with an integrated electrical connector (5) for a lining (10) of a passenger cabin (11) of an aircraft or spacecraft (100), comprising:
using (M3) an additive manufacturing, AM, or 3D printing technique to laterally form electrically conductive pins (6) on a panel body (3) of the lining panel (1) to provide an electrical connector (5), wherein the electrically conductive pins (6) are formed to connect to electric lines (2) attached to or formed on or into the panel body (3) of the lining panel (1).

2. Method (M) according to claim 1, further comprising:
forming (M4) an insulation (16) on the panel body (3) of the lining panel (1) around the electrically conductive pins (6), wherein the insulation (16) includes an insulating potting (17) being selected from the group consisting of silicones, epoxies, polyesters, and urethanes.

3. Method (M) according to one of the preceding claims, further comprising:
using (M3') an AM or 3D printing technique to form the electric lines (2) on or into the panel body (3) of the lining panel (1).

4. Method (M) according to one of the preceding claims, further comprising:
using (M1) an AM or 3D printing technique to manufacture the panel body (3) of the lining panel (1).

5. Method (M) according to claim 4, wherein at least one of the electrically conductive pins (6) and the electric lines (2) are simultaneously formed with the manufacturing of the panel body (3) of the lining panel (1).

6. Method (M) according to one of the claims 1 to 3, further comprising:
using (M1') an automated tape placement technique to manufacture the panel body (3) of the lining panel (1).

7. Method (M) according to one of the preceding claims, further comprising:
forming (M2) connector ports (4a) within the panel body (3) of the lining panel (1) configured to take in the electrically conductive pins (6), wherein the connector ports (4a) are formed by at least one of laser ablation and an AM or 3D printing technique; and
forming (M2') circuit channels (4b) within the panel body (3) of the lining panel (1) configured to take in the electric lines (2), wherein the circuit channels (4b) are formed by at least one of laser ablation and an AM or 3D printing technique.

8. Lining panel (1) with an integrated electrical connector (5) for a lining (10) of a passenger cabin (11) of an aircraft or spacecraft (100), the lining panel (1) comprising:
a panel body (3);
electric lines (2) being attached to or formed on or into the panel body (3); and
an electrical connector (5) with electrically conductive pins (6) formed laterally on the panel body (3) of the lining panel (1) using an AM or 3D printing technique, the electrically conductive pins (6) being configured to connect to the electric lines (2).

9. Lining panel (1) according to claim 8, wherein the electrically conductive pins (6) are formed within connector ports (4a) provided on the panel body (3) of the lining panel (1), and wherein the panel body (3) is interspersed by circuit channels (4b), into which the electric lines (2) are formed.

10. Lining panel (1) according to one of the claims 8 to 9, wherein the electrically conductive pins (6) are formed in a generally planar configuration.

11. Lining panel (1) according to one of the claims 8 to 10, wherein the electric lines (2) are configured as at least one of data lines (2a) and power lines (2b) and the electrically conductive pins (6) are configured as at least one of data pins (6a) and power pins (6b) for connecting to the data lines (2a) and the power lines (2b).

12. Lining panel (1) according to one of the claims 8 to 11, wherein an insulation (16) is formed on the panel body (3) of the lining panel (1) around the electrically conductive pins (6), the insulation (16) including an insulating potting (17) being selected from the group consisting of silicones, epoxies, polyesters, and urethanes.

13. Lining panel assembly (20) comprising a first lining panel (1a) according to one of the claims 8 to 12 and a second lining panel (1b) according to one of the claims 8 to 12, wherein the electrically conductive pins (6) of the first lining panel (1a) are complementary formed to the electrically conductive pins (6) of the second lining panel (1b), and wherein the first lining panel (1a) laterallyjoins the second lining panel (1b) such that the electrically conductive pins (6) of the first lining panel (1a) establish an electrical contact with the electrically conductive pins (6) of the second lining panel (1b).

14. Lining panel assembly (20) according to claim 13, wherein the first lining panel (1a) is fixed to the second lining panel (1b) by fastening elements (18a, 18b) integrated into the first lining panel (1a) and the second lining panel (1b).

15. Aircraft or spacecraft (100) comprising a lining panel (1) according to one of the claims 8 to 12 and/or a lining panel assembly (20) according to one of the claims 13 to 14.
